Europäisches Patentamt

**European Patent Office**

Office européen des brevets

(19)

(11) Publication number: **0 124 038**
A2

(12)

# EUROPEAN PATENT APPLICATION

(21) Application number: **84104461.3**

(22) Date of filing: **19.04.84**

(51) Int. Cl.³: **C 04 B 7/24,** C 04 B 31/00

(30) Priority: **29.04.83 IT 2084283**

(43) Date of publication of application: **07.11.84**
**Bulletin 84/45**

(84) Designated Contracting States: **AT BE CH DE FR GB LI**
**LU NL SE**

(71) Applicant: **ECODECO S.p.A., Cassinazza di Baselica,**
**I-27010 Giussago (Pavia) (IT)**

(72) Inventor: **Natta, Giuseppe, Località La Favorita,**
**I-20079 S. Angelo Lodigiano (Milano) (IT)**

(74) Representative: **Benedusi, Delfo, Internazionale Brevetti**
**S.r.l. Ing. Maranesi - Quartaroli & C. Via Meravigli 18,**
**I-20123 Milano (IT)**

(54) **Process for producing cement material from industrial processing and urban slurries.**

(57) A process for preparing cement material from industrial
processing and/or urban slurries by admixing to the slurries at
least one solid powder material of a cement nature and having
hydraulic characteristics, and then granulated or pelletized un-
til a solid material is obtained which has a pH value in the 8 to
12 range, preferably no higher than 9, and a moisture content
no higher than about 35%. The resulting material, depending
on the type of start slurry and the additives used, is a solid
granulate material which, by virtue of its composition and size
characteristics, can be directly utilized as raw cement in the
preparation of clinker, in the cement industry, or as a part-sub-
stitute for raw cement and/or as a coadjuvant in the cement in-
dustry.

"PROCESS FOR PRODUCING CEMENT MATERIAL FROM
INDUSTRIAL PROCESSING AND URBAN SLURRIES"

This invention relates to a process for the
production of cement material from industrial
processing and/or urban slurries.

In particular, the present invention is concerned
with a process for producing cement material from
industrial slurries of a mainly organic or inorganic
nature, by-products of industrial processes, or city
waste slurries, by recovering and utilizing their
contents to obtain products which may be utilized
as cement factory materials.

More specifically, the invention has for its
object    a process for the production of cement
factory material from the aforesaid industrial and/or
urban slurries by means of a suitable treatment to be
carried out with appropriate solid additives in
particular parametric conditions. The resulting product,
depending on the start slurry and the additives
employed, is in the form of a solid granulate which,
by virtue of its composition and size characteristics,
may be directly utilized as raw cement, and then,
following roasting, as clinker in the cement industry,
or alternatively, as a substitutive component and/or
coadjuvant in the industry and/or as fuel in cement
furnaces.

The clinker thus obtained, either directly from
the product or indirectly, and incorporating the
treated slurries, shows no derated physical
characteristics over corresponding ordinary clinkers,
and can accordingly ensure correct disposal of waste slurry matter without adversely affecting the environment.

The present invention, in fact, belongs to the general technology recently developed in connection with the problems of environmental protection arising from the disposal and/or neutralization of industrial and/or city waste waters.

Thus, several methods and/or processes have been proposed for neutralizing, in the first place, such slurries and/or water waste, and secondly, where feasible, for economically utilizing the same.

Known are destructive methods (slurry filtration and/or combustion) which, besides being unrelated to this invention, not always fully solve the problem owing to the difficult disposal of ashes or residual waters which often contain potentially hazardous residues for the environment. Furthermore, material handling and transporting, frequently in large quantities, pose heavy cost problems with no prospective for economical return.

Accordingly, a number of different neutralization processes have been proposed which provide for the solidification of slurries of industrial origin. Among the numerous proposals set forth, a typical example are those reviewed in R.B. Pojasek, "Toxic and Hazardous Waste Disposal", Ann. Arbor Science Publisher, Inc., 1979, which have, however, the limited object of incorporating waste materials, especially toxic ones, to impervious matrices of the siliceous or polymeric type, in order to prevent

0124038

subsequent wash-out, especially of metals.

No solution is provided to the problem of re-utilization.

Among the disposal methods related to the cement production cycle, some proposals provide for the admixture to the slurries of prime materials or substances of the hydraulic type as employed in the cement industry.

For example, methods are disclosed of admixing silicon-based and sodium silicate materials to the slurries, which are then granulated, etc., and supplied to the cement furnace; methods of premixing the slurries, in a more or less dried state, with the prime material of cement at a certain stage of the production cycle; and methods of dehydration of the slurries with calcium oxide, followed by calcination, granulation, etc., and final introduction of the resulting product as a cement additive.

Other additives, such as cement, carbonates, slags, etc. have also been described for individual slurries or sewage to be treated.

Nevertheless, and as mentioned above, even where the possibility for utilization of the resulting solid material as cement material or as intermediate for the cement industry is explicitly described, the essential object of such prior methods is that of neutralizing the slurries or solidifying particular slurries which contain hazardous substances (such as heavy metals, etc.) for subsequent delivery to the environment as waste.

- 4 -                    0124038

In fact, the inert solids thus obtained are either generally discharged to the environment, after treating the product against wash-out, or a generic possibility is suggested for utilization as a formable and curable material (for brick making, etc.).

The Applicant is not aware of any method being described in the art which is parametrically defined for conversion of industrial and/or urban slurries into a suitable material for use in the cement industry, and whereby that problem is solved in an industrially and economically effective way and not merely subordinated to the ecological aspect, which would, however, have to be taken into account as well.

On the other hand, the Applicant has countered in the course of its own experimental activity some technological problems which may occur in industrial practice when using directly, or as additives, the solid materials suggested by the prior art, especially during the clinker formation step in the cement factory, for example with Lepol furnaces of the grid type, etc., unless special precautions are taken.

The problems encountered may be so serious as to discourage the investigator from using such coadjuvant materials in the cement factory, or at least where long or cyclone furnaces are not available.

Also in this additional instance, however, the cement material is required to provide special characteristics of absence of powders and of reactivity for the formation of clinker, thus restricting the applicability of such materials.

It is an object of this invention, therefore, to provide an improved process for producing cement material from industrial processing and/or urban slurries, which affords a wide range of applicability with respect to prior art, while avoiding the cited shortcomings thereof.

A further object is to provide an improved process for producing cement material from industrial processing and/or urban slurries, by-products and/or waste of an organic and/or inorganic nature, which is simple to carry out and economical, and affords direct applicability at the source, and convenience of transportation.

These and other objects, such as will be more clearly understood by the skilled one from the description to follow, are achieved according to the invention by a process for preparing cement material from slurries issuing from industrial processing and/or urban waste by solidification and with the addition of a solid material, characterized in that said slurries are admixed with at least one solid cement material in powder form having hydraulic characteristics, and then granulated or pelletized to yield a solid material having a pH value in the 8 to 12 range, preferably no higher than 9, and a moisture content no higher than about 35%.

Advantageously, said solid cement material in powder form is selected from a group including fly ashes, metallurgical slag, cement, silica, silicates, alumina, and clay, and granulation or pelletization are carried out in the presence of calcium carbonate in amounts ranging from 10% to 90% by weight with respect to the hydraulic solid matter.

It has been unexpectedly found that the combination of the process conditions outlined above affords a final product which may be conveniently used directly as a raw cement or as an additive in the cement factory, without causing damage and/or problems as are connected with the use of materials prepared in accordance with prior practice, and in particular in the absence of massive release of powders and/or fumes of difficult environmental control.

In fact, according to the invention, in order for the final product to be convenient to use in the cement factory, it is necessary that the moisture content of the product along with the pH thereof be accurately controlled within the previously indicated limits.

Moisture content, in particular, will govern the physical characteristics of the product, as well as its consistency, curing time, and suitability for storage and transporting.

The Applicant has ascertained that final moisture content, which is a function of the slurry moisture content and of the amount of powder material used in the dry state, may be defined by the following equation, which affords control on the production process until a granulate is yielded which has a preset moisture content:

$$Y = \frac{X}{Uc} - 1 \qquad (1)$$

where Y is the overall amount of required dry solid matter referred to 1 kg slurry, X is the initial moisture content (%) of the slurry, and Uc is the moisture content (%) sought for the final product.

As for the other correlated parameter, namely basicity (pH) of the final product, it has also been found that it is highly important for the final application characteristics.

In fact, the pH or basicity value will determine, in accordance with this invention, the final suitability of the product for use in clinker yielding processes; this value should be maintained within the limits specified hereinabove.

For the purpose of this invention, it is determined by measuring the pH value of the pulp obtained by dispersing 10 g of the final product in powder form, e.g. having a granule size smaller than 1 mm, in 50 ml distilled $H_2O$, after stirring for 2 hours.

As stated in the foregoing, the powder materials to be used in accordance with this invention are preferably selected from fly ashes yielded by burning coal or coal dust in thermoelectric power plants; foundry metallurgical slag or steelworks slag; cement; silica; silicates; alumina; clay; etc.

Such materials, in fact, according to a further advantageous aspect of the present invention, may be, in turn, comprised of recovery and/or waste materials from various industrial processes, and may, therefore, contain minor amounts of some other substances, and especially oxides of iron, magnesium, calcium, or other metals such as Sr, Ba, Cr, Ni, Bi, Cu, Zn, etc., which as regards the product to be obtained admit of no application limits in the cement factory, within the qualitative limits of the clinker sought and compatibly with the quality of the roasting furnace emissions.

Furthermore, said dry materials in powder form may be used as such either alone or as mixed together, according to any ratii which can only be related to the final quality of the clinker sought, depending on whether they are utilized in the cement factory directly as raw cement or as a coadjuvant material. The material is added in powder form having a size preferably smaller than 1 mm.

It has been found, moreover, according to a particularly effective preferred embodiment of this process, that the addition of $CaCO_3$ to said materials, in percentages ranging from 10% to 90% with respect to the same, significantly improves the characteristics of the granulate product and facilitates subsequent treatment at the cement factory.

More specifically, the use of a material obtained by mixing together calcium carbonate and clay in an approximate ratio of 70:30 by weight of calcium carbonate to clay, gave optimum results especially in the respect of the basicity characteristics of the final product.

It thus becomes possible to achieve pH values of the pulp, according to the method described, which are equal to or lower than 9, i.e. basicity values which make the final product a particularly suitable one for use in cement production through any techniques (furnace type, etc.).

It is, however, possible to use any material or mixture of materials comprising suitable compositions to form cement or to be incorporated to cement, as well as adequate hydraulic characteristics to make the final product suitable for transportation and/or storage.

Finally, according to a further aspect of the invention, in order to accelerate the granulation process, and curing of the final product, it is advantageously possible to use catalysts or accelerators for the curing process during the mixing step, which would be preferably selected from sodium silicate and triethanolamine, in catalytic amounts ranging approximately from 0.1% to 5% by weight with respect to the total solid matter added.

The addition of these particular agents during the mixing step accelerates the curing process to allow the final product to acquire optimum hardness characteristics within a relatively short time.

The slurries which form the start material may comprise any slurry and/or slurry mixture of an inorganic and/or organic nature and content resulting from industrial processing and/or urban waste, provided that they do not contain unsuitable substances and/or elements for the obtainment of the required chemical and physical characteristics (curing, hydraulicity, etc.)in the final clinker.

0124038

Thus, the slurries may even contain a substantial amout, or prevailing amount, of organic matter; in other words, stabilized organic slurries from solid urban waste may be used. The term "stabilized" refers herein to a slurry which has been matured at rest for some time, as is known in the art.

Suitable slurries have shown to be, for example, the slurries issuing from the flocculation stage of industrial waste water depurators in general, urban organic waste slurries, slurries from canned food plants, from paper mills, galvanic plants, etc., whether treated or untreated. The composition of the starting slurry generally forms, therefore, no determining parameter in its utilization according to this invention, excepting for the above specified general limitations as regards the suitability of their contents for cement applications.

Nevertheless, their composition may govern to some extent their destination and/or specific use within the scope of the cement industry.

It is a known fact, indeed, that the roasting furnaces employed in the cement industry reach temperatures on the order of 1,400°C above, since they are adapted to process mixtures comprising clay and limestone, or argillaceous and calcareous materials, as the prime material of cement or coal as fuel, the ashes whereof would be incorporated to the cement (clinker).

In conclusion, two components are fed into the roasting furnace for cement producing: raw cement powder (clay and limestone), and the fuel, the heat treatment whereof yields clinker.

Thus, depending on the nature of the starting slurry, the granulates obtained with the present process may be utilized:

(a) as fuel, to at least in part replace the coal, in case the starting slurry and final product are mainly of an organic character;

(b) as raw cement to replace, or replace at least to some extent, and/or for additivation to the cement powder for raw clinker.

Instance (a) is evidently the one which prevails when slurries are utilized which are mainly or completely organic, such as those from organic solid urban waste converted into a slurry (issuing from depuration, etc. of the waste).

Inorganic slurries or slurries having a substantially inorganic content, such as from the depuration of industrial and/or urban waste waters, incinerators, galvanic industries, etc., find instead their use, following conversion as provided by the present process, particularly as a more or less full substitute for cement powder, or for optimizing the latter composition as a clinker additive.

More specifically, in the instance of slurries of an organic nature being used, and depending on their original compositions, additives may be obtained for cement powder or raw cement, to cause them to assume in the final product a suitable composition to balance the final overall composition of the clinker-forming powder through an appropriate selection of the material or mixture added in powder form to the slurry, both qualitatively and quantitatively. In this case, the addition of the product of this invention to the raw cement powder would be made, for example, in order to optimize the silicon and melting modules of the cement.

Again by way of example, percentages of inclusion of such an inoculant up to 30% by weight of the total raw cement become possible, depending on the composition of the starting slurry.

Alternatively, it will be possible to obtain from said inorganic slurries substitutive products for cement powder if the slurry composition is such as to allow, in combination with an appropriate selection of the material or mixture of materials in powder form additivated in accordance with this invention, arrival at a product the composition whereof is comparable and/or compatible with that of conventional raw cement.

In that case, and as mentioned already, there would exist no quantitative limitations to use in the cement factory, within the limits of said compatibility therewith as relates to the presence of minor elements, such as Fe, Ca, Sr, Ba, Mg, Cr, Ni, Bi, Cu, Zn, etc., and possible contraindications for the furnace chimney emissions.

The treatment process of this invention is implemented with substantially conventional procedures and apparatuses.

The slurries from different processes and/or dumps, storage areas, etc., where they are introduced and/or mixed together, are fed into a mixing and granulating or pelletizing apparatus of conventional design, whereat the appropriate operations of additivation of the powder reactants, etc. are carried out.

Mixing in the specific apparatus of the slurry with the powder material or mixture of materials is protracted until a homogeneous pulp is obtained, wherein the water contained in the slurry is fully utilized until the final values for moisture content and basicity are reached through appropriate metering of the additives in agreement with the above-specified parameters for moisture content and basicity, and taking into account the desired hydraulic characteristics for the final product, whether granulated or pelletized.

The granulated or pelletized final product has a consistency, curing time, etc., which make it specially suitable for transportation and/or storage either in siloes or outdoors or otherwise.

The present invention will be now further described through the Examples thereof which follow, given herein by way of illustration and not of limitation.

## EXAMPLE 1

Inorganic slurries containing 59% moisture, from the flocculation stage of a plant for purifying waste water from metal works, have been continuously fed through an appropriate metering device into a rotary mixer at a rate of 14.1 kilograms per hour (kg/h).

Also supplied to the mixer, using a continuous metering device, were 16.7 kg/h of an additive powder material, this amount having been calculated using equation (1) to achieve in the final product a moisture content of 20%.

The additive material in powder form used comprised 70% calcium carbonate in smaller size than 1 mm, the remnant 30% being Portland 325 cement.

After mixing, the pulp was granulated in a rotating drum, passed through a drier-maturer maintained at a temperature of 40°C by circulating hot gases, and discharged onto a storage yard.

The resulting product already showed a good strength on exiting the drier-maturer, such that it was at once suitable for transportation and storage at the cement factory. Crushing strength has shown to be 2.5 kg after 6 hours; 12.0 kg after 166 hours; and 18 kg after 266 hours ageing.

Measurement of the product basicity, in accordance with the method described hereinabove, gave a pH reading of 11.0. The product, as admixed in the proportion of 3% to prime materials usually employed in the cement factory, has been fed into a clinker production furnace and originated no problems.

EXAMPLE 2

21.3 kg/h of a slurry mixture from mechanical and chemical plants, and having a moisture content of 57.1%, have been mixed with 20.2 kg/h of an additive powder material in less than 1 mm size which contained 90% calcium carbonate and 10% Portland 325 cement, and treated in the plant as specified in Example 1.

On leaving the drying stage, the product had a moisture content of 29% and such strength characteristics that made it ready for transportation and storage at the cement factory. Crushing strength showed to be 1 kg after 6 hours, 7 kg after 166 hours and 11.0 kg after 266 hours.

Measurement of the product basicity gave a reading of pH = 9.5. Utilization of the product at the cement factory, following admixture to raw cement powder in a ratio ranging from 1.5% to 5%, originate no problems and yielded a clinker having good characteristics.

### EXAMPLE 3

10 kg of the slurry mixture specified in Example 2 have been mixed for one hour in a rotary mixer with a similar amount of a mixture containing 70% calcite and 30% clay in less than 1 mm size.

After drying in air for 48 hours, the product showed a good consistency and good strength, thereby it could be directly transported and stored at the cement factory. Crushing strength was 2 kg after 6, 166, and 266 hours.

Basicity measurement read pH = 9.00, this being an optimum value that makes the product suitable for cement preparation through any techniques.

The product, as admixed in a proportion of 3% to usual prime materials for the cement factory, has been fed into a clinker furnace and gave no problems of any kind.

## EXAMPLE 4

1 kg slurry having a moisture content of 70.3%, as specified in Example 2, has been mixed in a rotary mixer together with 1.5 kg of solid additive material in less than 1 mm size which comprised 1/3 Portland 325 cement and 2/3 fine powder foundry slag. The pulp was additivated with 69 ml of a 40 Bè sodium silicate solution.

Following granulation, the product, having now a 27% moisture content, showed a crushing strength of 1.9 kg after 6 hours, 20.5 kg after 166 hours, and 31.4 kg after 266 hours.

Measurement of the product basicity in accordance with the method described hereinabove read pH = 11.0.

The product, admixed in the proportion of 3% to usual prime materials for the cement factory, has been fed into a clinker furnace and no problems were encountered with it.

## EXAMPLE 5

1 kg slurry at 70.3% moisture content, as specified in Example 4, has been mixed, similarly to Example 4, with 1.5 kg solid additive material in less than 1 mm size containing 1/3 Portland 325 cement and 2/3 fly ashes. The pulp was additivated with 82 ml of a 40 Bè sodium silicate solution. After granulation, the product at a moisture content of 27% had a crushing strength of 3.8 kg after 6 hours, 20 kg after 166 hours, 30.3 kg after 366 hours, and 43 kg after 766 hours.

The resulting pulp from dispersing the product through water in accordance with the method described hereinabove had a pH of 10.0.

The product, when admixed in the proportion of 3% to usual prime materials for the cement factory, could be fed into a clinker furnace without it originating any problems.

CLAIMS:

1. A process for preparing cement material from slurries issuing from industrial processing and/or urban waste by the addition of a solid matter, characterized in that said slurries are admixed with at least one solid cement material in powder form having hydraulic characteristics, and then granulated or pelletized to yield a solid material having a pH value in the 8 to 12 range, preferably no higher than 9, and a moisture content no higher than about 35%.

2. A process according to Claim 1, characterized in that said solid hydraulic material in powder form is selected from fly ashes, metallurgical slag, cement, silica, silicates, alumina, clay, and mixtures thereof.

3. A process according to Claims 1 and 2, characterized in that it is conducted in the presence of calcium carbonate, said calcium carbonate being used in amounts ranging from 10% to 90% by weight with respect to said solid hydraulic material.

4. A process according to Claims 1, 2, and 3, characterized in that it is conducted in the presence of catalytic amounts of a curing accelerator preferably selected from sodium silicate and triethanolamine in proportions ranging from 0.1% to 5% by weight with respect to the total of additivated solid material.

5. A process according to the preceding claims, characterized in that the moisture content of the final product is controlled to satisfy the equation,

$$Y = \frac{X}{U_c} - 1 \qquad (1)$$

where Y is the overall amount of solid material in powder form per kilogram slurry, X is the moisture percent of the starting slurry, and Uc the moisture content sought for the final product.

6. A process according to the preceding claims, characterized in that the solid material in powder form utilized comprises, in turn, a recovery and/or waste material from industry.

7. A process according to the preceding claims, characterized in that, for said solid material in powder form, a mixture of calcium carbonate and clay is used in an approximate ratio by weight of 70:30 to the clay.

8. A process according to the preceding claims, characterized in that the starting slurry comprises at least one slurry composed of mainly inorganic or organic matters or mixtures thereof free of any substances and/or elements unsuitable to yield a clinker.

9. A process according to the preceding claims, characterized in that the starting slurry and yielded product are of a mainly organic nature, and that the product is used as fuel in the preparation of clinker.

10. A process according to Claims 1 to 8, characterized in that the starting slurry and yielded product are of a mainly inorganic nature , and that the product is used as raw cement replacing at least in part raw cement for clinker forming and/or as an additive therefor.